# EUROPÄISCHE PATENTSCHRIFT

(11) **EP 3 931 495 B1**
(45) Veröffentlichungstag und Bekanntmachung des Hinweises auf die Patenterteilung: **05.04.2023**
(21) Anmeldenummer: 20710057.9
(22) Anmeldetag: 24.02.2020
(51) Int. Cl.: F24D 13/02, H05B 3/28

(54) **VERFAHREN ZUR HERSTELLUNG EINES HEIZELEMENTS**
METHOD FOR PRODUCING A HEATING ELEMENT
PROCÉDÉ DE PRODUCTION D'UN ÉLÉMENT CHAUFFANT

(30) Priorität: 26.02.2019 AT 722019
(43) Veröffentlichungstag der Anmeldung: 05.01.2022
(73) Patentinhaber: Heliolith EU, 4722 Peuerbach (AT)
(72) Erfinder: FORST, Gerhard, 4722 Peuerbach (AT)
(74) Vertreter: Ellmeyer, Wolfgang
(86) Internationale Anmeldenummer: PCT/EP2020/054761
(87) Internationale Veröffentlichungsnummer: WO 2020/173870

(56) Entgegenhaltungen:
- EP-A1- 0 994 308
- DE-T2- 69 607 357
- DE-U1- 9 314 932
- DE-U1-202013 002 591

## Beschreibung

Die Erfindung betrifft ein Verfahren zur Herstellung eines Heizelements sowie ein Heizelement.

Heizelemente sind nützlich für die Beheizung von z.B. Wohnräumen. Besonders bei Renovierungen ist es zweckdienlich, eine neue Heizung einzubauen. Herkömmliche Heizsysteme erfordern jedoch einen hohen Investitionsaufwand für den Heizkessel, die Lagerung des Brennstoffs und das Verlegen der Heizwasserleitungen. Als Alternative kann eine Elektroheizung verwendet werden, die nur Stromleitungen benötigt. Als Elektroheizungen können beispielsweise Nachtspeicheröfen, bewegliche Elektro-Radiatoren oder Niedertemperatur-Heizelemente verwendet werden. Niedertemperatur-Heizelemente lassen sich formschön in die Einrichtung integrieren.

In der Literatur wurden Heizelemente beschrieben.

AT 514082 A4 beschreibt ein Strukturbauelement mit zumindest einem elektrischen Heizelement, welches in zumindest eine Schicht aus mineralisches Material enthaltenden Verbundwerkstoff eingebettet ist, eine Heizvorrichtung, insbesondere einen Kamin oder Ofen, mit zumindest einem solchen Strukturbauelement sowie ein Verfahren zur Herstellung eines solchen Strukturbauelements. Der Verbundwerkstoff enthält Glasfasern und Beton.

DE 20 2013 002 591 U1 beschreibt eine elektrische Speicherheizung mit zumindest einem elektrischen Heizelement, mit einer Ummantelung für das Heizelement, mit einer Steuereinheit des Heizelementes und mit einem elektrischen Anschluss zur Versorgung des Heizelementes mit elektrischem Strom, wobei die Ummantelung aus Polymerbeton gefertigt ist, die Ummantelung das Heizelement vollständig umschließt und ein elektrischer Anschluss von außerhalb der Ummantelung bis zu dem Heizelement geführt ist.

DE 94 04 687 U1 beschreibt einen aus Mineralguss bestehenden Formkörper. In diesem Formkörper sind in entsprechenden Hohlräumen Wärme abgebende bzw. übertragende Heizelemente vorgesehen.

DE 20 2013 002 915 U1 beschreibt einen Designheizkörper, bei dem Dekorationselemente über Klemmelemente mit einem Heizelement und einem Aufnahmerahmen kombiniert werden können.

Dokument DE 93 14 932 U1 offenbart ein Heizelement umfassend ein Trennmittel, eine Farbschicht, eine Schicht aus Polymerbeton, eine Heizmatte, Befestigungsmittel für das Heizelement, elektrische Anschlüsse für die Heizmatte, wobei die Heizmatte in den Polymerbeton eingebettet ist und vollständig vom Polymerbeton umschlossen ist und sich etwa in der Mitte der Dicke der Schicht aus Polymerbeton befindet; die elektrischen Anschlüsse aus dem Polymerbeton auf einer Seite herausragen; die Befestigungsmittel an einer Seite des Polymerbetons angeordnet sind, und die Heizmatte einen Funktionsthermostaten aufweist. Dokument DE 93 14 932 U1 offenbart auch ein Verfahren zur Herstellung dieses Heizelements.

Ziel der Erfindung ist die Bereitstellung eines Heizelements mit dekorativen Elementen sowie ein Herstellungsverfahren dafür.

Erfindungsgemäß wird dies dadurch erreicht, indem ein Verfahren zur Herstellung eines Heizelements bereitgestellt wird, das folgende Schritte umfasst:
a) Bereitstellen einer beliebigen Form (1) aus beispielsweise Metall, z.B. Aluminium, Stahl oder glasfaserverstärktem Kunststoff;
b) Hinzufügen eines Trennmittels (2) in die Form;
c) 30- bis 60-minütiges Verweilenlassen des Trennmittels (2) in der Form (1), gegebenenfalls unter Erhitzen;
d) Hinzufügen einer Farbschicht (3) zum Trennmittel (2);
e) Hinzufügen einer ersten Menge an Polymerbeton (5) auf eine Dicke, die etwa der halben Dicke des Endprodukts entspricht, wobei Luft entweicht;
f) Hinzufügen der Heizmatte (4), die elektrische Anschlüsse aufweist, wenn der Polymerbeton (5) zähflüssig ist, wobei die Heizmatte (4) in den Polymerbeton (5) einsinkt und in den Polymerbeton (5) eingebettet wird, wobei die elektrischen Anschlüsse für die Heizmatte (4) aus dem Polymerbeton (5) herausragen;
g) Hinzufügen einer zweiten Menge an Polymerbeton (5) auf die endgültige Dicke des Heizelements;
h) Hinzufügen eines Formgussteils (7) mit Gewindehülsen (6) bzw. Schrauben, bevor der Polymerbeton (5) ausgehärtet ist;
i) Entfernen der in Schritt a) bereitgestellten Form (1) .

Durch dieses Verfahren können Heizelemente mit beliebiger Form hergestellt werden, indem eine gewünschte Form für die Form in Schritt a) bereitgestellt wird. Das Verfahren ist einfach und kostengünstig durchzuführen und benötigt geringen apparativen Aufwand. Die elektrischen Anschlüsse ermöglichen einen Anschluss über ein elektrisches Anschlusskabel und eine normale Steckdose oder einen direkten Anschluss an einen elektrischen Auslass in der Wand und/oder Decke. Das Heizelement kann sowohl an der Wand als auch auf der Decke verwendet werden. Das Erhitzen in Schritt c) kann bei 80 bis 100 °C erfolgen. Die Aushärtungszeit in Schritt h) beträgt ca. 60 bis 120 min. Danach kann Schritt i) durchgeführt werden. Unter "zähflüssig" wird eine dynamische Viskosität von 6.000 bis 10.000 cP (6.000 bis 10.000 mPa.s) verstanden.

Die Vorteile aus der Konstruktionsweise und Fertigungstechnologie und den verwendeten Materialien sind wie folgt:
+ das Heizelement ist ein 100%iger Isolator
+ durch die kompakte und robuste Bauweise ist das Heizelement vandalensicher; Beschädigungen bei Fertigung, Transport und Montage sind so gut wie ausgeschlossen
+ ressourcenschonende Konstruktion und 100 % Recyclingfähigkeit
+ Formfreiheit in allen Dimensionen
+ Wassertransferdipping (WTD) ist möglich, was bei auf dem derzeit auf dem Markt erhältlichen Heizelementen nicht möglich ist
+ Ultraviolettdruck/Direktdruck (UVD) auf dem fertigen Heizelement ist möglich
+ die Verwendung von VESA-Halterungen und eine Montage vertikal/horizontal ohne neue Löcher bohren zu müssen ist möglich (weil die Anordnung der Bohrlöcher quadratisch ist)

In einer Ausführungsform kann das Verfahren folgende Schritte umfassen:
a) Bereitstellen einer beliebigen Form (1) aus beispielsweise Metall, z.B. Aluminium, Stahl oder glasfaserverstärktem Kunststoff;
b) Hinzufügen eines Trennmittels (2) in die Form;
c) 30- bis 60-minütiges Verweilenlassen des Trennmittels (2) in der Form (1), gegebenenfalls unter Erhitzen;
d) Hinzufügen einer Farbschicht (3) zum Trennmittel (2);
e) Hinzufügen einer ersten Menge an Polymerbeton (5) auf eine Dicke, die etwa der halben Dicke des Endprodukts entspricht, unter Rütteln, wobei Luft entweicht;
f) Hinzufügen der Heizmatte (4), die elektrische Anschlüsse aufweist, wenn der Polymerbeton (5) zähflüssig ist, und weiteres Rütteln, wobei die Heizmatte (4) in den Polymerbeton (5) einsinkt und in den Polymerbeton (5) eingebettet wird, wobei die elektrischen Anschlüsse für die Heizmatte (4) aus dem Polymerbeton (5) herausragen;
g) Hinzufügen einer zweiten Menge an Polymerbeton (5) auf die endgültige Dicke des Heizelements unter Rütteln;
h) Hinzufügen eines Formgussteils (7) mit Gewindehülsen (6) bzw. Schrauben, bevor der Polymerbeton (5) ausgehärtet ist;
i) Entfernen der in Schritt a) bereitgestellten Form (1) .

Das Rütteln führt zu einer besseren Mischung der einzelnen Komponenten.

In einer Ausführungsform kann das Trennmittel Bienenwachs und/oder Carnaubawachs umfassen. Beispielsweise kann "HONEY WAX mold release agent" der Firma Stoner Molding Solutions (Katalognummer P52314) verwendet werden. Ein Trennmittel mit einer solchen Zusammensetzung lässt sich nach Durchführung der Schritte a) bis h) einfach von der Form trennen und ergibt so ein formschönes und ästhetisch ansprechendes Heizelement.

In einer Ausführungsform der Erfindung kann die Farbschicht eine Gelcoat in einer beliebigen RAL-Farbe sein. Eine Gelcoat umfasst ein Polyesterharz auf Isophthalsäure/Neopentylgykol-Basis, oftmals mit Kieselsäure eingedickt. Die Farbe kann jede beliebige RAL-Farbe sein. Die Gelcoat kann auch epoxy-frei, styrolarm bzw. styrolfrei sein. Eine solche Farbe dünstet bei Gebrauch bei höheren Temperaturen keine flüchtigen Stoffe aus und ist daher geruchsneutral und umweltschonend.

In einer Ausführungsform kann der Polymerbeton (5) als Hauptbestandteil (>50 Gew.-%) Quarzsand oder Glasgranulat oder sonstiges Granulat, ca. 10-45 Gew.-% Harz und als Additive (<15 Gew.-%) Härter, Beschleuniger, Kreidemehl umfassen. In einer anderen Ausführungsform kann der Polymerbeton als Hauptbestandteil (>75 Gew.-%) Quarzsand oder Glasgranulat oder sonstiges Granulat, ca. 10-20 Gew.-% Harz und als Additive (<15 Gew.-%) Härter, Beschleuniger, Kreidemehl umfassen. Bei einem Harzgehalt zwischen 20-45 Gew.-% kann das Rütteln im Hertsellungsverfahren entfallen. Ein bevorzugter Bereich für Harz ist 13-17 Gew.-%. Ein Polymerbeton mit einer solchen Zusammensetzung eignet sich hervorragend zum Gießen der Polymerbeton-Schicht und zeigt eine ausgezeichnete Funktionalität als Heizkörper mit hybrider Wärme (ausgewogener Anteil an Wärmestrahlung von ∼40 % und Konvektion von ~60 %). Als Harz kann beispielsweise ein ungesättigtes Polyesterharz (z.B. NORESTER 2912 BV der Firma Pultex), als Härter eine Lösung von Methylethylketonperoxid und Acetylacetonperoxid in TXIB (2,2,4-Trimethyl-1,3-pentandioldiisobutyrat) (z.B. PEROXAN M64 A1X der Firma Pergan) und als Beschleuniger ein Cobaltoctoat in TXIB (z.B. PERGAQUICK C12X der Firma Pergan) verwendet werden.

In einer Ausführungsform der Erfindung kann das Rütteln bei einer Rüttelfrequenz von 200 bis 245 s⁻¹ ausgeführt werden. Dies bewirkt ein Entweichen der Luft aus dem Polymerbeton und somit eine homogene Phase ohne Lufteinschlüsse, die die Wärmeleitung stören können.

In einer Ausbildung der Erfindung kann die Heizmatte aus einem Heizdraht bestehen, der auf einem Glasfasergitter aufgebracht ist, und einen Funktionsthermostaten aufweisen, der mittig auf der Heizmatte angeordnet ist. Der Funktionsthermostat schaltet bei 95-105 °C aus und bei 60-70 °C wieder ein. Ein Beispiel für einen Funktionsthermostaten ist Schutz-Temperatur-Begrenzer S06 der Firma Thermik. Der Thermostat ist zentral positioniert und direkt an der Heizmatte angeordnet, um effizient steuern zu können, auch ohne kurzfristige äußere Einflüsse im Nahbereich von Türen und Fenstern, durch z.B. Zugluft. Durch das Aufbringen des Heizdrahts auf eine Glasfasermatte kann die Heizmatte vorproduziert werden. Die Anordnung des Heizdrahts ist in jedem produzierten Heizelement gleich. Das Aufbringen des Heizdrahts in den Polymerbeton ist erleichtert.

In einer Ausführungsform der Erfindung kann bei einer Heizleistung bis 400 W der Heizdraht ein Cr/Mn/Ni-Draht sein, der einen Durchmesser von etwa 0,05 bis etwa 0,2 mm aufweist, oder bei einer Heizleistung über 400 W kann der Heizdraht ein Cu/Ni-Draht sein, der einen Durchmesser von etwa 0,05 bis etwa 0,2 mm aufweist. Diese Drähte eignen sich für die angegebenen Leistungsbereich hervorragend zur Erzielung von Heizleistung.

In einer Ausführungsform der Erfindung kann der Heizdraht pro W Leistung eine Länge von etwa 3,5 bis etwa 5,5 cm aufweisen. Somit ist eine Über- oder Unterdimensionierung nicht möglich.

In einer Ausführungsform kann der Heizdraht regelmäßig auf der Glasfasermatte in Bahnen angeordnet sein, wobei der Abstand zwischen den Drahtbahnen am Rand der Glasfasermatte enger ist als in der Mitte. Die engere Anordnung am Rand bewirkt eine gleichmäßigere Wärmeabstrahlung über die gesamte Fläche, da am Rand mehr Wärme an die Seite abgegeben wird und somit mehr Heizleistung in Form von dichterer Anordnung von Heizdrähten erforderlich ist.

In einer Ausbildung der Erfindung können Schritt g) und h) in umgekehrter Reihenfolge durchgeführt werden. Dies ermöglicht eine Anpassung des Verfahrens wenn gewünscht.

Ein anderer Aspekt der Erfindung betrifft ein Heizelement, das Folgendes umfasst
i) Trennmittel
ii) eine Farbschicht
iii) eine Schicht aus Polymerbeton
iv) eine Heizmatte
v) Befestigungsmittel für das Heizelement
vi) elektrische Anschlüsse für die Heizmatte
wobei die Abfolge der Schichten Trennmittel - Farbschicht - Schicht aus Polymerbeton ist; die Heizmatte in den Polymerbeton eingebettet ist und vollständig vom Polymerbeton umschlossen ist und sich etwa in der Mitte der Dicke der Schicht aus Polymerbeton befindet; die elektrischen Anschlüsse aus dem Polymerbeton auf der Seite herausragen, die dem Trennmittel gegenüber liegt; die Befestigungsmittel an der Seite des Polymerbetons angeordnet sind, die dem Trennmittel gegenüber liegt; und die Heizmatte einen Funktionsthermostaten aufweist, der mittig auf der Heizmatte angeordnet ist.

Diese Anordnung ergibt ein Heizelement, das gleichmäßig Wärme abgeben kann. Der Funktionsthermostat schaltet bei 95-105 °C aus und bei 60-70 °C wieder ein. Ein Beispiel für einen Funktionsthermostaten ist Schutz-Temperatur-Begrenzer S06 der Firma Thermik. Der Thermostat ist zentral positioniert und direkt an der Heizmatte angeordnet, um effizient steuern zu können, auch ohne kurzfristige äußere Einflüsse im Nahbereich von Türen und Fenstern, durch z.B. Zugluft.

Die elektrischen Anschlüsse ermöglichen einen Anschluss über ein elektrisches Anschlusskabel und eine normale Steckdose oder einen direkten Anschluss an einen elektrischen Auslass in der Wand und/oder Decke. Das Heizelement kann sowohl an der Wand als auch auf der Decke verwendet werden.

In einer Ausführungsform kann das Trennmittel Bienenwachs und/oder Carnaubawachs umfassen. Beispielsweise kann "HONEY WAX mold release agent" der Firma Stoner Molding Solutions (Katalognummer P52314) verwendet werden. Ein Trennmittel mit einer solchen Zusammensetzung lässt sich nach Durchführung der Schritte a) bis h) einfach von der Form trennen und ergibt so ein formschönes und ästhetisch ansprechendes Heizelement.

In einer Ausführungsform der Erfindung kann die Farbschicht eine Gelcoat in einer beliebigen RAL-Farbe sein. Eine Gelcoat umfasst ein Polyesterharz auf Isophthalsäure/Neopentylgykol-Basis, oftmals mit Kieselsäure eingedickt. Die Farbe kann jede beliebige RAL-Farbe sein. Die Gelcoat kann auch epoxy-frei, styrolarm bzw. styrolfrei sein. Eine solche Farbe dünstet bei Gebrauch bei höheren Temperaturen keine flüchtigen Stoffe aus und ist daher geruchsneutral und umweltschonend.

In einer Ausführungsform kann der Polymerbeton (5) als Hauptbestandteil (>50 Gew.-%) Quarzsand oder Glasgranulat oder sonstiges Granulat, ca. 10-45 Gew.-% Harz und als Additive (<15 Gew.-%) Härter, Beschleuniger, Kreidemehl umfassen. In einer anderen Ausführungsform kann der Polymerbeton als Hauptbestandteil (>75 Gew.-%) Quarzsand oder Glasgranulat oder sonstiges Granulat, ca. 10-20 Gew.-% Harz und als Additive (<15 Gew.-%) Härter, Beschleuniger, Kreidemehl umfassen. Bei einem Harzgehalt zwischen 20-45 Gew.-% kann das Rütteln im Hertsellungsverfahren entfallen. Ein bevorzugter Bereich für Harz ist 13-17 Gew.-%. Ein Polymerbeton mit einer solchen Zusammensetzung eignet sich hervorragend zum Gießen der Polymerbeton-Schicht und zeigt eine ausgezeichnete Funktionalität als Heizkörper mit hybrider Wärme (ausgewogener Anteil an Wärmestrahlung von ∼40 % und Konvektion von ~60 %). Als Harz kann beispielsweise ein ungesättigtes Polyesterharz (z.B. NORESTER 2912 BV der Firma Pultex), als Härter eine Lösung von Methylethylketonperoxid und Acetylacetonperoxid in TXIB (2,2,4-Trimethyl-1,3-pentandioldiisobutyrat) (z.B. PEROXAN M64 A1X der Firma Pergan) und als Beschleuniger ein Cobaltoctoat in TXIB (z.B. PERGAQUICK C12X der Firma Pergan) verwendet werden.

In einer Ausbildung der Erfindung kann die Heizmatte aus einem Heizdraht bestehen, der auf einem Glasfasergitter aufgebracht ist. Durch das Aufbringen des Heizdrahts auf eine Glasfasermatte kann die Heizmatte vorproduziert werden. Die Anordnung des Heizdrahts ist in jedem produzierten Heizelement gleich. Das Aufbringen des Heizdrahts in den Polymerbeton ist erleichtert.

In einer Ausführungsform der Erfindung kann bei einer Heizleistung bis 400 W der Heizdraht ein Cr/Mn/Ni-Draht sein, der einen Durchmesser von etwa 0,05 bis etwa 0,2 mm aufweist, oder bei einer Heizleistung über 400 W kann der Heizdraht ein Cu/Ni-Draht sein, der einen Durchmesser von etwa 0,05 bis etwa 0,2 mm aufweist. Diese Drähte eignen sich für die angegebenen Leistungsbereich hervorragend zur Erzielung von Heizleistung. In einer Ausführungsform der Erfindung kann der Heizdraht pro W Leistung eine Länge von etwa 3,5 bis etwa 5,5 cm aufweisen. Somit ist eine Über- oder Unterdimensionierung nicht möglich.

In einer Ausführungsform kann der Heizdraht regelmäßig auf der Glasfasermatte in Bahnen angeordnet sein, wobei der Abstand zwischen den Drahtbahnen am Rand der Glasfasermatte enger ist als in der Mitte. Die engere Anordnung am Rand bewirkt eine gleichmäßigere Wärmeabstrahlung über die gesamte Fläche, da am Rand mehr Wärme an die Seite abgegeben wird und somit mehr Heizleistung in Form von dichterer Anordnung von Heizdrähten erforderlich ist.

### Kurzbeschreibung der Zeichnungen:

In den Figuren werden folgende Bezugszeichen verwendet:
- 1: Form
- 2: Trennmittel
- 3: Farbschicht
- 4: Heizmatte
- 5: Polymerbeton
- 6: Hülsen
- 7: Formgussteil
- 8: Funktionsthermostat

### Figurenbeschreibung:

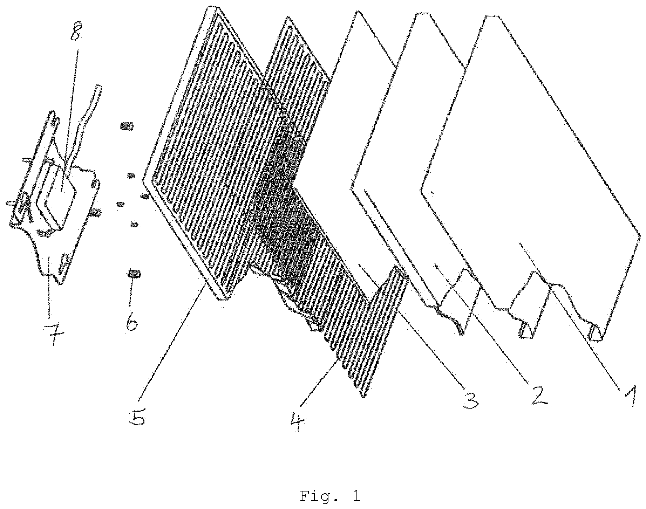

Fig. 1 zeigt einen schichtweisen Aufbau eines Heizelements gemäß der Erfindung von vorne.

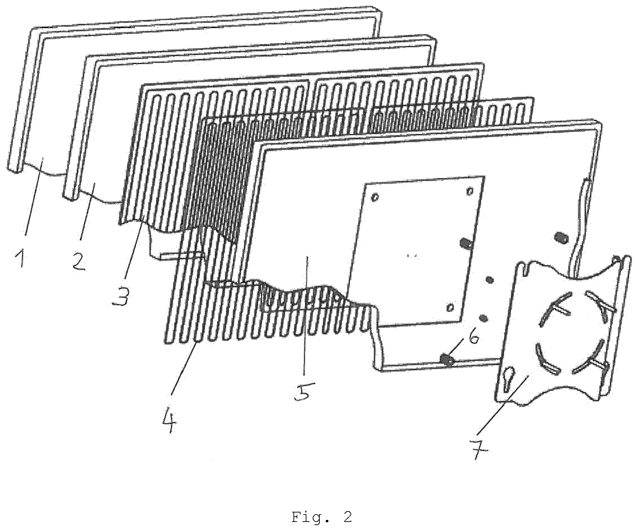

Fig. 2 zeigt einen schichtweisen Aufbau eines Heizelements gemäß der Erfindung von hinten.

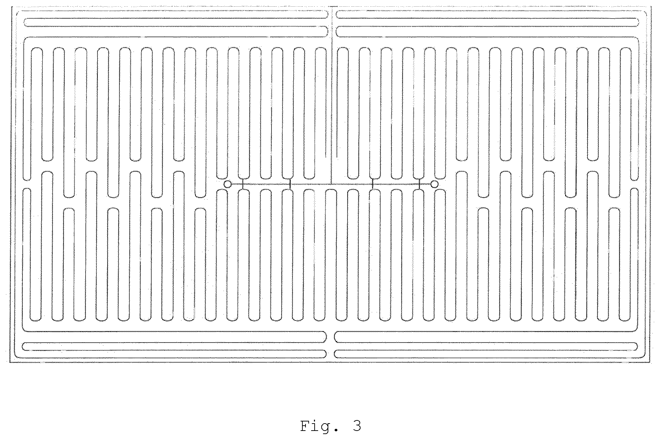

Fig. 3 zeigt eine Anordnung des Heizdrahts gemäß der Erfindung.

### BEISPIELE

### Beispiel 1

### Herstellung eines Heizelements

Das Verfahren umfasst folgende Schritte:
a) Bereitstellen einer beliebigen Form (1) aus beispielsweise Metall, z.B. Aluminium, Stahl oder glasfaserverstärktem Kunststoff;
b) Hinzufügen eines Trennmittels (2) in die Form;
c) 30- bis 60-minütiges Verweilenlassen des Trennmittels (2) in der Form (1), gegebenenfalls unter Erhitzen;
d) Hinzufügen einer Farbschicht (3) zum Trennmittel (2);
e) Hinzufügen einer ersten Menge an Polymerbeton (5) auf eine Dicke, die etwa der halben Dicke des Endprodukts entspricht, wobei Luft entweicht;
f) Hinzufügen der Heizmatte (4), die elektrische Anschlüsse aufweist, wenn der Polymerbeton (5) zähflüssig ist, wobei die Heizmatte (4) in den Polymerbeton (5) einsinkt und in den Polymerbeton (5) eingebettet wird, wobei die elektrischen Anschlüsse für die Heizmatte (4) aus dem Polymerbeton (5) herausragen;
g) Hinzufügen einer zweiten Menge an Polymerbeton (5) auf die endgültige Dicke des Heizelements;
h) Hinzufügen eines Formgussteils (7) mit Gewindehülsen (6) bzw. Schrauben, bevor der Polymerbeton (5) ausgehärtet ist;
i) Entfernen der in Schritt a) bereitgestellten Form (1) .

Die Gestalt der Form 1 kann beliebig sein. Jede gewünschte Gestalt kann verwendet werden, z.B. rechteckig, quadratisch, rund, aber auch Fantasieformen wie eine Wolke, eine Zeichentrickfigur, ein Markenlogo usw. Über elektrischen Anschlüsse wird das Heizelement über ein elektrisches Anschlusskabel an den Strom angeschlossen. Das Heizelement kann an der Wand oder der Decke montiert werden. Unter "zähflüssig" wird eine dynamische Viskosität von 6.000 bis 10.000 cP (6.000 bis 10.000 mPa.s) verstanden.

Als Trennmittel 2 wird "HONEY WAX mold release agent" der Firma Stoner Molding Solutions (Katalognummer P52314) verwendet.

Die Farbschicht 3 ist eine Gelcoat in einer beliebigen RAL-Farbe. Eine Gelcoat umfasst ein Polyesterharz auf Isophthalsäure/Neopentylgykol-Basis, oftmals mit Kieselsäure eingedickt. Die Farbe kann jede beliebige RAL-Farbe sein. Die Gelcoat kann auch epoxy-frei, styrolarm bzw. styrolfrei sein.

Der Polymerbeton 5 weist ca. 50 Gew.-% Quarzsand, ca. 45 Gew.- % Harz und als Additive (ca. 5 Gew.-%) Härter, Beschleuniger, Kreidemehl auf. Als Harz wird NORESTER 2912 BV der Firma Pultex (ein ungesättigtes Polyesterharz), als Härter PEROXAN M64 A1X der Firma Pergan (eine Lösung von Methylethylketonperoxid und Acetylacetonperoxid in TXIB (2,2,4-Trimethyl-1,3-pentandioldiisobutyrat)) und als Beschleuniger PERGAQUICK C12X der Firma Pergan (Beschleuniger ein Cobaltoctoat in TXIB) verwendet.

Die Heizmatte 4 besteht aus einem Heizdraht, der auf einem Glasfasergitter aufgebracht ist, und weist einen Funktionsthermostaten 8 auf, der mittig auf der Heizmatte 4 angeordnet ist. Der Funktionsthermostat 8 schaltet bei 95-105 °C aus und bei 60-70 °C wieder ein. Der verwendete Funktionsthermostat 8 ist der Schutz-Temperatur-Begrenzer S06 der Firma Thermik. Der Thermostat ist zentral positioniert und direkt an der Heizmatte 4 angeordnet, um effizient steuern zu können, auch ohne kurzfristige äußere Einflüsse im Nahbereich von Türen und Fenstern, durch z.B. Zugluft. Durch das Aufbringen des Heizdrahts auf eine Glasfasermatte kann die Heizmatte 4 vorproduziert werden. Die Anordnung des Heizdrahts ist in jedem produzierten Heizelement gleich. Das Aufbringen des Heizdrahts in den Polymerbeton 5 ist erleichtert.

Der verwendete Heizdraht ist bei einer Heizleistung bis 400 W ein Cr/Mn/Ni-Draht, der einen Durchmesser von etwa 0,05 bis etwa 0,2 mm aufweist; bei einer Heizleistung über 400 W ist der Heizdraht ein Cu/Ni-Draht, der einen Durchmesser von etwa 0,05 bis etwa 0,2 mm aufweist. Bei einer Heizleistung von 265 W beträgt die Heizdrahtlänge 13,8 m; bei einer Heizleistung von 620 W beträgt die Heizdrahtlänge 24,25 m; bei einer Heizleistung von 970 W beträgt die Heizdrahtlänge 41,6 m.

Der Heizdraht ist regelmäßig auf der Glasfasermatte in Bahnen angeordnet, wobei der Abstand zwischen den Drahtbahnen am Rand der Glasfasermatte enger ist als in der Mitte. Die engere Anordnung am Rand bewirkt eine gleichmäßigere Wärmeabstrahlung über die gesamte Fläche, da am Rand mehr Wärme an die Seite abgegeben wird und somit mehr Heizleistung in Form von dichterer Anordnung von Heizdrähten erforderlich ist.

Die Vorteile aus der Konstruktionsweise und Fertigungstechnologie und den verwendeten Materialien sind wie folgt:
+ das Heizelement ist ein 100%iger Isolator
+ durch die kompakte und robuste Bauweise ist das Heizelement vandalensicher; Beschädigungen bei Fertigung, Transport und Montage sind so gut wie ausgeschlossen
+ ressourcenschonende Konstruktion und 100 % Recyclingfähigkeit
+ Formfreiheit in allen Dimensionen
+ Wassertransferdipping (WTD) ist möglich, was bei auf dem derzeit auf dem Markt erhältlichen Heizelementen nicht möglich ist
+ Ultraviolettdruck/Direktdruck (UVD) auf dem fertigen Heizelement ist möglich
+ die Verwendung von VESA-Halterungen und eine Montage vertikal/horizontal ohne neue Löcher bohren zu müssen ist möglich (weil die Anordnung der Bohrlöcher quadratisch ist)

Eine Leistung für das Heizelement beträgt typischerweise 2,2 kW/m². Ein Heizelement mit 265 W wiegt ca. 8 kg; ein Heizelement mit 620 W wiegt ca. 15 kg; ein Heizelement mit 970 W wiegt ca. 23 kg. Die Dicke eines Heizelements beträgt ca. 28 mm, wobei in der Mitte des Heizelements auf der Rückseite eine Überhöhung vorhanden sein kann.

### Beispiel 2

### Herstellung eines Heizelements

Das Verfahren umfasst folgende Schritte:
a) Bereitstellen einer beliebigen Form 1 aus beispielsweise Metall, z.B. Aluminium, Stahl oder glasfaserverstärktem Kunststoff;
b) Hinzufügen eines Trennmittels 2 in die Form;
c) 30- bis 60-minütiges Verweilenlassen des Trennmittels 2 in der Form 1, wobei auf 80 bis 100 °C erhitzt wird;
d) Hinzufügen einer Farbschicht 3 zum Trennmittel 2;
e) Hinzufügen einer ersten Menge an Polymerbeton 5 auf eine Dicke, die etwa der halben Dicke des Endprodukts entspricht, unter Rütteln, wobei Luft entweicht;
f) Hinzufügen der Heizmatte 4, die elektrische Anschlüsse aufweist, wenn der Polymerbeton 5 zähflüssig ist, und weiteres Rütteln, wobei die Heizmatte 4 in den Polymerbeton 5 einsinkt und in den Polymerbeton 5 eingebettet wird, wobei die elektrischen Anschlüsse für die Heizmatte 4 aus dem Polymerbeton 5 herausragen;
g) Hinzufügen einer zweiten Menge an Polymerbeton 5 auf die endgültige Dicke des Heizelements unter Rütteln;
h) Hinzufügen eines Formgussteils 7 mit Gewindehülsen 6 bzw. Schrauben, bevor der Polymerbeton 5 ausgehärtet ist; anschließend Aushärten ca. 60 bis 120 min lang;
i) Entfernen der in Schritt a) bereitgestellten Form 1.

Die Gestalt der Form 1 kann beliebig sein. Jede gewünschte Gestalt kann verwendet werden, z.B. rechteckig, quadratisch, rund, aber auch Fantasieformen wie eine Wolke, eine Zeichentrickfigur, ein Markenlogo usw. Über elektrischen Anschlüsse wird das Heizelement über ein elektrisches Anschlusskabel an den Strom angeschlossen. Das Heizelement kann an der Wand oder der Decke montiert werden. Unter "zähflüssig" wird eine dynamische Viskosität von 6.000 bis 10.000 cP (6.000 bis 10.000 mPa.s) verstanden.

Als Trennmittel 2 wird "HONEY WAX mold release agent" der Firma Stoner Molding Solutions (Katalognummer P52314) verwendet.

Die Farbschicht 3 ist eine Gelcoat in einer beliebigen RAL-Farbe. Eine Gelcoat umfasst ein Polyesterharz auf Isophthalsäure/Neopentylgykol-Basis, oftmals mit Kieselsäure eingedickt. Die Farbe kann jede beliebige RAL-Farbe sein. Die Gelcoat kann auch epoxy-frei, styrolarm bzw. styrolfrei sein.

Der Polymerbeton 5 weist ca. 75 Gew.-% Quarzsand, ca. 10 Gew.- % Harz und als Additive (ca. 15 Gew.-%) Härter, Beschleuniger, Kreidemehl auf. Als Harz wird NORESTER 2912 BV der Firma Pultex (ein ungesättigtes Polyesterharz), als Härter PEROXAN M64 A1X der Firma Pergan (eine Lösung von Methylethylketonperoxid und Acetylacetonperoxid in TXIB (2,2,4-Trimethyl-1,3-pentandioldiisobutyrat)) und als Beschleuniger PERGAQUICK C12X der Firma Pergan (Beschleuniger ein Cobaltoctoat in TXIB) verwendet.

Das Rütteln erfolgt bei einer Rüttelfrequenz von 200 bis 245 s ¹. Dies bewirkt ein Entweichen der Luft aus dem Polymerbeton 5 und somit eine homogene Phase ohne Lufteinschlüsse, die die Wärmeleitung stören können.

Die Heizmatte 4 besteht aus einem Heizdraht, der auf einem Glasfasergitter aufgebracht ist, und weist einen Funktionsthermostaten 8 auf, der mittig auf der Heizmatte 4 angeordnet ist. Der Funktionsthermostat 8 schaltet bei 95-105 °C aus und bei 60-70 °C wieder ein. Der verwendete Funktionsthermostat 8 ist der Schutz-Temperatur-Begrenzer S06 der Firma Thermik. Der Thermostat ist zentral positioniert und direkt an der Heizmatte 4 angeordnet, um effizient steuern zu können, auch ohne kurzfristige äußere Einflüsse im Nahbereich von Türen und Fenstern, durch z.B. Zugluft. Durch das Aufbringen des Heizdrahts auf eine Glasfasermatte kann die Heizmatte 4 vorproduziert werden. Die Anordnung des Heizdrahts ist in jedem produzierten Heizelement gleich. Das Aufbringen des Heizdrahts in den Polymerbeton 5 ist erleichtert.

Der verwendete Heizdraht ist bei einer Heizleistung bis 400 W ein Cr/Mn/Ni-Draht, der einen Durchmesser von etwa 0,05 bis etwa 0,2 mm aufweist; bei einer Heizleistung über 400 W ist der Heizdraht ein Cu/Ni-Draht, der einen Durchmesser von etwa 0,05 bis etwa 0,2 mm aufweist. Bei einer Heizleistung von 265 W beträgt die Heizdrahtlänge 13,8 m; bei einer Heizleistung von 620 W beträgt die Heizdrahtlänge 24,25 m; bei einer Heizleistung von 970 W beträgt die Heizdrahtlänge 41,6 m.

Der Heizdraht ist regelmäßig auf der Glasfasermatte in Bahnen angeordnet, wobei der Abstand zwischen den Drahtbahnen am Rand der Glasfasermatte enger ist als in der Mitte. Die engere Anordnung am Rand bewirkt eine gleichmäßigere Wärmeabstrahlung über die gesamte Fläche, da am Rand mehr Wärme an die Seite abgegeben wird und somit mehr Heizleistung in Form von dichterer Anordnung von Heizdrähten erforderlich ist.

Die Vorteile aus der Konstruktionsweise und Fertigungstechnologie und den verwendeten Materialien sind wie folgt:
+ das Heizelement ist ein 100%iger Isolator
+ durch die kompakte und robuste Bauweise ist das Heizelement vandalensicher; Beschädigungen bei Fertigung, Transport und Montage sind so gut wie ausgeschlossen
+ ressourcenschonende Konstruktion und 100 % Recyclingfähigkeit
+ Formfreiheit in allen Dimensionen
+ Wassertransferdipping (WTD) ist möglich, was bei auf dem derzeit auf dem Markt erhältlichen Heizelementen nicht möglich ist
+ Ultraviolettdruck/Direktdruck (UVD) auf dem fertigen Heizelement ist möglich
+ die Verwendung von VESA-Halterungen und eine Montage vertikal/horizontal ohne neue Löcher bohren zu müssen ist möglich (weil die Anordnung der Bohrlöcher quadratisch ist)

Eine Leistung für das Heizelement beträgt typischerweise 2,2 kW/m². Ein Heizelement mit 265 W wiegt ca. 8 kg; ein Heizelement mit 620 W wiegt ca. 15 kg; ein Heizelement mit 970 W wiegt ca. 23 kg. Die Dicke eines Heizelements beträgt ca. 28 mm, wobei in der Mitte des Heizelements auf der Rückseite eine Überhöhung vorhanden sein kann.

### Beispiele 3-34

### Herstellung eines Heizelements

Die Beispiele 3-34 wurden wie in Beispiel 1 bzw. Beispiel 2 beschrieben durchgeführt, mit der Ausnahme, dass unterschiedliche Zusammensetzungen für den Polymerbeton 5 verwendet wurden. In der Tabelle bedeutet "wie in Beispiel 1" und "wie in Beispiel 2", dass dasselbe Harz bzw. dasselbe Additiv und dasselbe Verfahren wie in Beispiel 1 bzw. Beispiel 2 verwendet wurde.

| | Hauptbestandteil | Harz | Additive |
|---|---|---|---|
| Beispiel 3 | ca. 65 Gew.-% Quarzsand | ca. 30 Gew.-% wie in Beispiel 1 | ca. 5 Gew.-% wie in Beispiel 1 |
| Beispiel 4 | ca. 52 Gew.-% Quarzsand | ca. 40 Gew.-% wie in Beispiel 1 | ca. 8 Gew.-% wie in Beispiel 1 |
| Beispiel 5 | ca. 50 Gew.-% Quarzsand | ca. 40 Gew.-% wie in Beispiel 1 | ca. 10 Gew.-% wie in Beispiel 1 |
| Beispiel 6 | ca. 50 Gew.-% Quarzsand | ca. 45 Gew.-% wie in Beispiel 1 | ca. 5 Gew.-% wie in Beispiel 1 |
| Beispiel 7 | ca. 75 Gew.-% Quarzsand | ca. 20 Gew.-% wie in Beispiel 2 | ca. 5 Gew.-% wie in Beispiel 2 |
| Beispiel 8 | ca. 75 Gew.-% Quarzsand | ca. 17 Gew.-% wie in Beispiel 2 | ca. 8 Gew.-% wie in Beispiel 2 |
| Beispiel 9 | ca. 80 Gew.-% Quarzsand | ca. 10 Gew.-% wie in Beispiel 2 | ca. 10 Gew.-% wie in Beispiel 2 |
| Beispiel 10 | ca. 80 Gew.-% Quarzsand | ca. 15 Gew.-% wie in Beispiel 2 | ca. 5 Gew.-% wie in Beispiel 2 |
| Beispiel 11 | ca. 85 Gew.-% Quarzsand | ca. 10 Gew.-% wie in Beispiel 2 | ca. 5 Gew.-% wie in Beispiel 2 |
| Beispiel 12 | ca. 85 Gew.-% Quarzsand | ca. 13 Gew.-% wie in Beispiel 2 | ca. 2 Gew.-% wie in Beispiel 2 |
| Beispiel 13 | ca. 65 Gew.-% Kies | ca. 30 Gew.-% wie in Beispiel 1 | ca. 5 Gew.-% wie in Beispiel 1 |
| Beispiel 14 | ca. 52 Gew.-% Kies | ca. 40 Gew.-% wie in Beispiel 1 | ca. 8 Gew.-% wie in Beispiel 1 |
| Beispiel 15 | ca. 50 Gew.-% Kies | ca. 40 Gew.-% wie in Beispiel 1 | ca. 10 Gew.-% wie in Beispiel 1 |
| Beispiel 16 | ca. 50 Gew.-% Kies | ca. 45 Gew.-% wie in Beispiel 1 | ca. 5 Gew.-% wie in Beispiel 1 |
| Beispiel 17 | ca. 75 Gew.-% Kies | ca. 20 Gew.-% wie in Beispiel 2 | ca. 5 Gew.-% wie in Beispiel 2 |
| Beispiel 18 | ca. 75 Gew.-% Kies | ca. 17 Gew.-% wie in Beispiel 2 | ca. 8 Gew.-% wie in Beispiel 2 |
| Beispiel 19 | ca. 75 Gew.-% Kies | ca. 10 Gew.-% wie in Beispiel 2 | ca. 15 Gew.-% wie in Beispiel 2 |
| Beispiel 20 | ca. 80 Gew.-% Kies | ca. 10 Gew.-% wie in Beispiel 2 | ca. 10 Gew.-% wie in Beispiel 2 |
| Beispiel 21 | ca. 80 Gew.-% Kies | ca. 15 Gew.-% wie in Beispiel 2 | ca. 5 Gew.-% wie in Beispiel 2 |
| Beispiel 22 | ca. 85 Gew.-% Kies | ca. 10 Gew.-% wie in Beispiel 2 | ca. 5 Gew.-% wie in Beispiel 2 |
| Beispiel 23 | ca. 85 Gew.-% Kies | ca. 13 Gew.-% wie in Beispiel 2 | ca. 2 Gew.-% wie in Beispiel 2 |
| Beispiel 24 | ca. 75 Gew.-% Glasgranulat | ca. 20 Gew.-% wie in Beispiel 2 | ca. 5 Gew.-% wie in Beispiel 2 |
| Beispiel 25 | ca. 65 Gew.-% Glasgranulat | ca. 30 Gew.-% wie in Beispiel 1 | ca. 5 Gew.-% wie in Beispiel 1 |
| Beispiel 26 | ca. 52 Gew.-% Glasgranulat | ca. 40 Gew.-% wie in Beispiel 1 | ca. 8 Gew.-% wie in Beispiel 1 |
| Beispiel 27 | ca. 50 Gew.-% Glasgranulat | ca. 40 Gew.-% wie in Beispiel 1 | ca. 10 Gew.-% wie in Beispiel 1 |
| Beispiel 28 | ca. 50 Gew.-% Glasgranulat | ca. 45 Gew.-% wie in Beispiel 1 | ca. 5 Gew.-% wie in Beispiel 1 |
| Beispiel 29 | ca. 75 Gew.-% Glasgranulat | ca. 17 Gew.-% wie in Beispiel 2 | ca. 8 Gew.-% wie in Beispiel 2 |
| Beispiel 30 | ca. 75 Gew.-% Glasgranulat | ca. 10 Gew.-% wie in Beispiel 2 | ca. 15 Gew.-% wie in Beispiel 2 |
| Beispiel 31 | ca. 80 Gew.-% Glasgranulat | ca. 10 Gew.-% wie in Beispiel 2 | ca. 10 Gew.-% wie in Beispiel 2 |
| Beispiel 32 | ca. 80 Gew.-% Glasgranulat | ca. 15 Gew.-% wie in Beispiel 2 | ca. 5 Gew.-% wie in Beispiel 2 |
| Beispiel 33 | ca. 85 Gew.-% Glasgranulat | ca. 10 Gew.-% wie in Beispiel 2 | ca. 5 Gew.-% wie in Beispiel 2 |
| Beispiel 34 | ca. 85 Gew.-% Glasgranulat | ca. 13 Gew.-% wie in Beispiel 2 | ca. 2 Gew.-% wie in Beispiel 2 |

## Patentansprüche

1. Verfahren zur Herstellung eines Heizelements, folgende Schritte umfassend:
a) Bereitstellen einer beliebigen Form (1) aus beispielsweise Metall, z.B. Aluminium, Stahl oder glasfaserverstärktem Kunststoff;
b) Hinzufügen eines Trennmittels (2) in die Form;
c) 30- bis 60-minütiges Verweilenlassen des Trennmittels (2) in der Form (1), gegebenenfalls unter Erhitzen;
d) Hinzufügen einer Farbschicht (3) zum Trennmittel (2);
e) Hinzufügen einer ersten Menge an Polymerbeton (5) auf eine Dicke, die etwa der halben Dicke des Endprodukts entspricht, wobei Luft entweicht;
f) Hinzufügen der Heizmatte (4), die elektrische Anschlüsse aufweist, wenn der Polymerbeton (5) zähflüssig ist, wobei die Heizmatte (4) in den Polymerbeton (5) einsinkt und in den Polymerbeton (5) eingebettet wird, wobei die elektrischen Anschlüsse für die Heizmatte (4) aus dem Polymerbeton (5) herausragen;
g) Hinzufügen einer zweiten Menge an Polymerbeton (5) auf die endgültige Dicke des Heizelements;
h) Hinzufügen eines Formgussteils (7) mit Gewindehülsen (6) bzw. Schrauben, bevor der Polymerbeton (5) ausgehärtet ist;
i) Entfernen der in Schritt a) bereitgestellten Form (1).

2. Verfahren zur Herstellung eines Heizelements, folgende Schritte umfassend:
a) Bereitstellen einer beliebigen Form (1) aus beispielsweise Metall, z.B. Aluminium, Stahl oder glasfaserverstärktem Kunststoff;
b) Hinzufügen eines Trennmittels (2) in die Form;
c) 30- bis 60-minütiges Verweilenlassen des Trennmittels (2) in der Form (1), gegebenenfalls unter Erhitzen;
d) Hinzufügen einer Farbschicht (3) zum Trennmittel (2);
e) Hinzufügen einer ersten Menge an Polymerbeton (5) auf eine Dicke, die etwa der halben Dicke des Endprodukts entspricht, unter Rütteln, wobei Luft entweicht;
f) Hinzufügen der Heizmatte (4), die elektrische Anschlüsse aufweist, wenn der Polymerbeton (5) zähflüssig ist, und weiteres Rütteln, wobei die Heizmatte (4) in den Polymerbeton (5) einsinkt und in den Polymerbeton (5) eingebettet wird, wobei die elektrischen Anschlüsse für die Heizmatte (4) aus dem Polymerbeton (5) herausragen;
g) Hinzufügen einer zweiten Menge an Polymerbeton (5) auf die endgültige Dicke des Heizelements unter Rütteln;
h) Hinzufügen eines Formgussteils (7) mit Gewindehülsen (6) bzw. Schrauben, bevor der Polymerbeton (5) ausgehärtet ist;
i) Entfernen der in Schritt a) bereitgestellten Form (1) .

3. Verfahren zur Herstellung eines Heizelements nach Anspruch 1 oder 2, **dadurch gekennzeichnet, dass**
das Trennmittel (2) Bienenwachs und/oder Carnaubawachs umfasst.

4. Verfahren zur Herstellung eines Heizelements nach einem der vorangegangenen Ansprüche, **dadurch gekennzeichnet, dass**
die Farbschicht (3) eine Gelcoat in einer beliebigen RAL-Farbe ist.

5. Verfahren zur Herstellung eines Heizelements nach einem der vorangegangenen Ansprüche, **dadurch gekennzeichnet, dass**
der Polymerbeton (5) als Hauptbestandteil (>50 Gew.-%) Quarzsand oder Glasgranulat oder sonstiges Granulat, ca. 10-45 Gew.-% Harz und als Additive (<15 Gew.-%) Härter, Beschleuniger, Kreidemehl umfasst.

6. Verfahren zur Herstellung eines Heizelements nach einem der vorangegangenen Ansprüche, **dadurch gekennzeichnet, dass**
der Polymerbeton (5) als Hauptbestandteil (>75 Gew.-%) Quarzsand oder Glasgranulat oder sonstiges Granulat, ca. 10-20 Gew.-% Harz und als Additive (<15 Gew.-%) Härter, Beschleuniger, Kreidemehl umfasst.

7. Verfahren zur Herstellung eines Heizelements nach einem der Ansprüche 2 bis 6, **dadurch gekennzeichnet, dass**
das Rütteln bei einer Rüttelfrequenz von 200 bis 245 s⁻¹ ausgeführt wird.

8. Verfahren zur Herstellung eines Heizelements nach einem der vorangegangenen Ansprüche, **dadurch gekennzeichnet, dass**
die Heizmatte (4) aus einem Heizdraht besteht, der auf einem Glasfasergitter aufgebracht ist, und
die Heizmatte (4) einen Funktionsthermostaten (8) aufweist, der mittig auf der Heizmatte (4) angeordnet ist.

9. Verfahren zur Herstellung eines Heizelements nach Anspruch 8, **dadurch gekennzeichnet, dass**
bei einer Heizleistung bis 400 W der Heizdraht ein Cr/Mn/Ni-Draht ist, der einen Durchmesser von etwa 0,05 bis etwa 0,2 mm aufweist, oder
bei einer Heizleistung über 400 W der Heizdraht ein Cu/Ni-Draht ist, der einen Durchmesser von etwa 0,05 bis etwa 0,2 mm aufweist.

10. Verfahren zur Herstellung eines Heizelements nach Anspruch 8 oder 9, **dadurch gekennzeichnet, dass**
der Heizdraht pro W Leistung eine Länge von etwa 3,5 bis etwa 5,5 cm aufweist.

11. Verfahren zur Herstellung eines Heizelements nach einem der Ansprüche 8 bis 10, **dadurch gekennzeichnet, dass**
der Heizdraht regelmäßig auf der Glasfasermatte in Bahnen angeordnet ist, wobei der Abstand zwischen den Drahtbahnen am Rand der Glasfasermatte enger ist als in der Mitte.

12. Verfahren zur Herstellung eines Heizelements nach einem der vorangegangenen Ansprüche, **dadurch gekennzeichnet, dass**
Schritt g) und h) in umgekehrter Reihenfolge durchgeführt werden.

13. Heizelement, Folgendes umfassend:
i) Trennmittel (2)
ii) eine Farbschicht (3)
iii) eine Schicht aus Polymerbeton (5)
iv) eine Heizmatte (4)
v) Befestigungsmittel (6) für das Heizelement
vi) elektrische Anschlüsse für die Heizmatte (4)
**dadurch gekennzeichnet, dass**
die Abfolge der Schichten Trennmittel (2) - Farbschicht (3) - Schicht aus Polymerbeton (5) ist;
die Heizmatte (4) in den Polymerbeton (5) eingebettet ist und vollständig vom Polymerbeton (5) umschlossen ist und sich etwa in der Mitte der Dicke der Schicht aus Polymerbeton (5) befindet;
die elektrischen Anschlüsse aus dem Polymerbeton (5) auf der Seite herausragen, die dem Trennmittel (2) gegenüber liegt;
die Befestigungsmittel (6) an der Seite des Polymerbetons (5) angeordnet sind, die dem Trennmittel (2) gegenüber liegt; und
die Heizmatte (4) einen Funktionsthermostaten (8) aufweist, der mittig auf der Heizmatte (4) angeordnet ist.

14. Heizelement nach Anspruch 13, **dadurch gekennzeichnet, dass**
das Trennmittel (2) Bienenwachs und/oder Carnaubawachs umfasst.

15. Heizelement nach einem der Ansprüche 13 oder 14, **dadurch gekennzeichnet, dass**
die Farbschicht (3) eine Gelcoat in einer beliebigen RAL-Farbe ist.

16. Heizelement nach einem der Ansprüche 13 bis 15, **dadurch gekennzeichnet, dass**
der Polymerbeton (5) als Hauptbestandteil (>50 Gew.-%) Quarzsand oder Glasgranulat oder sonstiges Granulat, ca. 10-45 Gew.-% Harz und als Additive (<15 Gew.-%) Härter, Beschleuniger, Kreidemehl umfasst.

17. Heizelement nach einem der Ansprüche 13 bis 15, **dadurch gekennzeichnet, dass**
der Polymerbeton (5) als Hauptbestandteil (>75 Gew.-%) Quarzsand oder Glasgranulat oder sonstiges Granulat, ca. 10-20 Gew.-% Harz und als Additive (<15 Gew.-%) Härter, Beschleuniger, Kreidemehl umfasst.

18. Heizelement nach einem der Ansprüche 13 bis 17, **dadurch gekennzeichnet, dass**
die Heizmatte (4) aus einem Heizdraht besteht, der auf einem Glasfasergitter aufgebracht ist.

19. Heizelement nach Anspruch 18, **dadurch gekennzeichnet, dass**
bei einer Heizleistung bis 400 W der Heizdraht ein Cr/Mn/Ni-Draht ist, der einen Durchmesser von etwa 0,05 bis etwa 0,2 mm aufweist, oder
bei einer Heizleistung über 400 W der Heizdraht ein Cu/Ni-Draht ist, der einen Durchmesser von etwa 0,05 bis etwa 0,2 mm aufweist.

20. Heizelement nach Anspruch 18 oder 19, **dadurch gekennzeichnet, dass**
der Heizdraht pro W Leistung eine Länge von etwa 3,5 bis etwa 5,5 cm aufweist.

21. Heizelement nach einem der Ansprüche 18 bis 20, **dadurch gekennzeichnet, dass**
der Heizdraht regelmäßig auf der Glasfasermatte in Bahnen angeordnet ist, wobei der Abstand zwischen den Drahtbahnen am Rand der Glasfasermatte enger ist als in der Mitte.

## Claims

1. A method for producing a heating element, comprising the following steps:
a) providing an arbitrarily shaped mould (1), for example from metal, e.g., aluminum, steel or glass fibre reinforced plastic;
b) adding a release agent (2) to the mould;
c) leaving the release agent (2) to dwell in the mould (1) for 30 to 60 minutes, optionally with heating;
d) adding a coat of paint (3) to the release agent (2);
e) adding a first quantity of polymer concrete (5) to a thickness corresponding to around half the thickness of the finished product, causing air to escape;
f) adding a heating mat (4), which has electrical connections, when the polymer concrete (5) is viscous, the heating mat (4) then sinking into the polymer concrete (5) and being embedded in the polymer concrete (5), with the electrical connections for the heating mat (4) protruding from the polymer concrete (5);
g) adding a second quantity of polymer concrete (5) to the ultimate thickness of the heating element;
h) adding a casting (7) with threaded sleeves (6) or bolts before the polymer concrete (5) has cured;
i) removing the mould (1) provided in step a).

2. The method for producing a heating element, comprising the following steps:
a) providing an arbitrarily shaped mould (1), for example from metal, e.g., aluminium, steel or glass fibre reinforced plastic;
b) adding a release agent (2) to the mould;
c) leaving the release agent (2) to dwell in the mould (1) for 30 to 60 minutes, optionally with heating;
d) adding a coat of paint (3) to the release agent (2);
e) adding a first quantity of polymer concrete (5) to a thickness corresponding to around half the thickness of the finished product while shaking, causing air to escape;
f) adding a heating mat (4), which has electrical connections, when the polymer concrete (5) is viscous and further shaking, the heating mat (4) then sinking into the polymer concrete (5) and being embedded in the polymer concrete (5), with the electrical connections for the heating mat (4) protruding from the polymer concrete (5);
g) adding a second quantity of polymer concrete (5) to the ultimate thickness of the heating element while shaking;
h) adding a casting (7) with threaded sleeves (6) or bolts before the polymer concrete (5) has cured;
i) removing the mould (1) provided in step a).

3. The method for producing a heating element according to claim 1 or 2, **characterized in that** the release agent (2) comprises beeswax and/or carnauba wax.

4. The method for producing a heating element according to any one of the preceding claims, **characterized in that** the coat of paint (3) is a gelcoat in any RAL color.

5. The method for producing a heating element according to any one of the preceding claims, **characterized in that** the polymer concrete (5) comprises as the main component (> 50% by weight) quartz sand or glass granulate or any other granulate, about 10-45% by weight resin and as additives (< 15% by weight) curing agents, accelerators, pulverized chalk.

6. The method for producing a heating element according to any one of the preceding claims, **characterized in that** the polymer concrete (5) comprises as the main component (> 75% by weight) quartz sand or glass granulate or any other granulate, about 10-20% by weight resin and as additives (< 15% by weight) curing agents, accelerators, pulverized chalk.

7. The method for producing a heating element according to any one of claims 2 to 6, **characterized in that** the shaking is performed at a shaking frequency of 200 to 245 s⁻¹.

8. The method for producing a heating element according to any one of the preceding claims, **characterized in that**
the heating mat (4) is composed of a heating wire that is mounted on a fibreglass grating, and
the heating mat (4) has a functional thermostat (8) that is arranged in the centre of the heating mat (4).

9. The method for producing a heating mat according to claim 8, **characterized in that**,
at a heating power up to 400 W, the heating wire is a Cr/Mn/Ni wire that has a diameter of about 0.05 to about 0.2 mm, or
at a heating power of more than 400 W, the heating wire is a Cu/Ni wire that has a diameter of about 0.05 to about 0.2 mm.

10. The method for producing a heating element according to claim 8 or 9, **characterized in that** the heating wire has a length of about 3.5 to about 5.5 cm per W power.

11. The method for producing a heating element according to any one of claims 8 to 10, **characterized in that** the heating wire is evenly arranged in lanes on the fibreglass mat, wherein the distance between the lanes of wire is narrower on the periphery of the fibreglass mat than in its centre.

12. The method for producing a heating element according to any one of the preceding claims, **characterized in that** steps g) and h) are performed in reverse order.

13. A heating element, comprising:
i) a release agent (2)
ii) a coat of paint (3)
iii) a layer of polymer concrete (5)
iv) a heating mat (4)
v) fastening means (6) for the heating element
vi) electrical connections for the heating mat (4),
**characterized in that**
the order of layers is release agent (2) - coat of paint (3) - layer of polymer concrete (5);
the heating mat (4) is embedded in the polymer concrete (5) and is entirely encompassed by the polymer concrete (5) and is located approximately in the centre of the thickness of the layer of polymer concrete (5);
the electrical connections protrude from the polymer concrete (5) on the side opposite the release agent (2);
the fastening means (6) are arranged on the side of the polymer concrete (5) opposite the release agent (2); and
the heating mat (4) has a functional thermostat (8) that is arranged in the centre of the heating mat (4).

14. The heating element according to claim 13, **characterized in that** the release agent (2) comprises beeswax and/or carnauba wax.

15. The heating element according to any one of claims 13 or 14, **characterized in that** the coat of paint (3) is a gelcoat in any RAL color.

16. The heating element according to any one of claims 13 to 15, **characterized in that** the polymer concrete (5) comprises as the main component (> 50% by weight) quartz sand or glass granulate or any other granulate, about 10-45% by weight resin and as additives (< 15% by weight) curing agents, accelerators, pulverized chalk.

17. The heating element according to any one of claims 13 to 15, **characterized in that** the polymer concrete (5) comprises as the main component (> 75% by weight) quartz sand or glass granulate or any other granulate, about 10-20% by weight resin and as additives (< 15% by weight) curing agents, accelerators, pulverized chalk.

18. The heating element according to any one of claims 13 to 17, **characterized in that**
the heating mat (4) is composed of a heating wire that is mounted on a fibreglass grating.

19. The heating element according to claim 18, **characterized in that**
at a heating power up to 400 W, the heating wire is a Cr/Mn/Ni wire that has a diameter of about 0.05 to about 0.2 mm, or
at a heating power of more than 400 W, the heating wire is a Cu/Ni wire that has a diameter of about 0.05 to about 0.2 mm.

20. The heating element according to claim 18 or 19, **characterized in that** the heating wire has a length of about 3.5 to about 5.5 cm per W power.

21. The heating element according to any one of claims 18 to 20, **characterized in that** the heating wire is evenly arranged in lanes on the fibreglass mat, wherein the distance between the lanes of wire is narrower on the periphery of the fibreglass mat than in its centre.

## Revendications

1. Procédé de fabrication d'un élément chauffant, comprenant les étapes suivantes consistant à :
a) fournir un moule (1) quelconque, par exemple en métal, par ex. en aluminium, en acier ou en plastique renforcé de fibre de verre ;
b) ajouter un agent de démoulage (2) dans le moule ;
c) laisser l'agent de démoulage (2) dans le moule (1) pendant 30 à 60 minutes, éventuellement sous chauffage ;
d) ajouter une couche de couleur (3) à l'agent de démoulage (2) ;
e) ajouter une première quantité de béton polymère (5) jusqu'à une épaisseur qui correspond approximativement à la moitié de l'épaisseur du produit final, faisant échapper de l'air ;
f) ajouter le tapis chauffant (4) comportant des bornes électriques, lorsque le béton polymère (5) est visqueux, le tapis chauffant (4) s'enfonçant dans le béton polymère (5) et étant incorporé dans le béton polymère (5), les bornes électriques pour le tapis chauffant (4) sortant du béton polymère (5) ;
g) ajouter une deuxième quantité de béton polymère (5) jusqu'à l'épaisseur finale de l'élément chauffant ;
h) ajouter une pièce moulée (7) avec des douilles (6) ou des vis avant que le béton polymère (5) ait durci ;
i) enlever le moule (1) fourni dans l'étape a).

2. Procédé de fabrication d'un élément chauffant, comprenant les étapes suivantes consistant à :
a) fournir un moule (1) quelconque par exemple en métal, par ex. en aluminium, en acier ou en plastique renforcé de fibre de verre ;
b) ajouter un agent de démoulage (2) dans le moule ;
c) laisser l'agent de démoulage (2) dans le moule (1) pendant 30 à 60 minutes, éventuellement sous chauffage ;
d) ajouter une couche de couleur (3) à l'agent de démoulage (2) ;
e) ajouter une première quantité de béton polymère (5) en secouant, jusqu'à une épaisseur qui correspond approximativement à la moitié de l'épaisseur du produit final, faisant échapper de l'air;
f) ajouter le tapis chauffant (4) comportant des bornes électriques, lorsque le béton polymère (5) est visqueux, et secouer encore, le tapis chauffant (4) s'enfonçant dans le béton polymère (5) et étant incorporé dans le béton polymère (5), les bornes électriques pour le tapis chauffant (4) sortant du béton polymère (5) ;
g) ajouter une deuxième quantité de béton polymère (5) en secouant, jusqu'à l'épaisseur finale de l'élément chauffant;
h) ajouter une pièce moulée (7) avec des douilles (6) ou des vis avant que le béton polymère (5) ait durci ;
i) enlever le moule (1) fourni dans l'étape a).

3. Procédé de fabrication d'un élément chauffant selon la revendication 1 ou 2, **caractérisé en ce que** l'agent de démoulage (2) comprend de la cire d'abeille et/ou de la cire de carnauba.

4. Procédé de fabrication d'un élément chauffant selon l'une quelconque des revendications précédentes, **caractérisé en ce que** la couche de couleur (3) est un gelcoat d'une couleur RAL quelconque.

5. Procédé de fabrication d'un élément chauffant selon l'une quelconque des revendications précédentes, **caractérisé en ce que** le béton polymère (5) comprend du sable quartzeux ou des granulés de verre ou d'autres granulés comme composant principal (> 50 % en poids), approximativement 10-45 % en poids de résine et des durcisseurs, des accélérateurs, de la craie pulvérisée comme additifs (<15 % en poids).

6. Procédé de fabrication d'un élément chauffant selon l'une quelconque des revendications précédentes, **caractérisé en ce que** le béton polymère (5) comprend du sable quartzeux ou des granulés de verre ou d'autres granulés comme composant principal (> 75 % en poids), approximativement 10-20 % en poids de résine et des durcisseurs, des accélérateurs, de la craie pulvérisée comme additifs (<15 % en poids).

7. Procédé de fabrication d'un élément chauffant selon l'une quelconque des revendications 2 à 6, **caractérisé en ce que** le secouement est effectué à une fréquence de secouement comprise entre 200 et 245 s⁻¹.

8. Procédé de fabrication d'un élément chauffant selon l'une quelconque des revendications précédentes, **caractérisé en ce que** le tapis chauffant (4) est constitué d'un fil de chauffage fixé sur une grille en fibre de verre et **en ce que**
le tapis chauffant (4) a un thermostat de fonction (8) disposé au centre du tapis chauffant (4).

9. Procédé de fabrication d'un élément chauffant selon la revendication 8, **caractérisé en ce que**, lors d'une puissance calorifique jusqu'à 400 W, le fil de chauffage est un fil de Cr/Mn/Ni ayant un diamètre compris entre approximativement 0,05 et approximativement 0,2 mm.

10. Procédé de fabrication d'un élément chauffant selon la revendication 8 ou 9, **caractérisé en ce que** le fil de chauffage a une longueur comprise entre approximativement 3,5 et approximativement 5,5 cm par W de puissance.

11. Procédé de fabrication d'un élément chauffant selon l'une quelconque des revendications 8 à 10, **caractérisé en ce que** le fil de chauffage est disposé régulièrement dans des voies sur le tapis en fibre de verre, l'écartement entre les voies du fil étant plus étroit au bord du tapis en fibre de verre qu'au centre.

12. Procédé de fabrication d'un élément chauffant selon l'une quelconque des revendications précédentes, **caractérisé en ce que** les étapes g) et h) sont effectuées dans l'ordre inverse.

13. Élément chauffant, comprenant :
i) un agent de démoulage (2)
ii) une couche de couleur (3)
iii) une couche de béton polymère (5)
iv) un tapis chauffant (4)
v) des moyens de fixation (6) pour l'élément chauffant
vi) des bornes électriques pour le tapis chauffant (4),
**caractérisé en ce que**
l'ordre des couches est le suivant : agent de démoulage (2) - couche de couleur (3) - couche de béton polymère (5) ;
le tapis chauffant (4) est incorporé dans le béton polymère (5) et entièrement enfermé dans le béton polymère (5) et situé approximativement au centre de l'épaisseur de la couche en béton polymère (5) ;
les bornes électriques sortent du béton polymère (5) sur le côté opposé à l'agent de démoulage (2) ;
les moyens de fixation (6) sont disposés sur le côté du béton polymère (5) opposé à l'agent de démoulage (2) ; et
le tapis chauffant (4) a un thermostat de fonction (8) qui est disposé au centre du tapis chauffant (4).

14. Élément chauffant selon la revendication 13, **caractérisé en ce que** l'agent de démoulage (2) comprend de la cire d'abeille et/ou de la cire de carnauba.

15. Élément chauffant selon la revendication 13 ou 14, **caractérisé en ce que** la couche de couleur (3) est un gelcoat d'une couleur RAL quelconque.

16. Élément chauffant selon l'une quelconque des revendications 13 à 15, **caractérisé en ce que** le béton polymère (5) comprend du sable quartzeux ou des granulés de verre ou d'autres granulés comme composant principal (> 50 % en poids), approximativement 10-45 % en poids de résine et des durcisseurs, des accélérateurs, de la craie pulvérisée comme additifs (<15 % en poids).

17. Élément chauffant selon l'une quelconque des revendications 13 à 15, **caractérisé en ce que** le béton polymère (5) comprend du sable quartzeux ou des granulés de verre ou d'autres granulés comme composant principal (> 75 % en poids), approximativement 10-20 % en poids de résine et des durcisseurs, des accélérateurs, de la craie pulvérisée comme additifs (<15 % en poids).

18. Élément chauffant selon l'une quelconque des revendications 13 à 17, **caractérisé en ce que** le tapis chauffant (4) est constitué d'un fil de chauffage fixé sur une grille en fibre de verre.

19. Élément chauffant selon la revendication 18, **caractérisé en ce que**,
lors d'une puissance calorifique jusqu'à 400 W, le fil de chauffage est un fil de Cr/Mn/Ni ayant un diamètre compris entre approximativement 0,05 et approximativement 0,2 mm, ou
lors d'une puissance calorifique au-dessus de 400 W, le fil de chauffage est un fil de Cu/Ni ayant un diamètre compris entre approximativement 0,05 et approximativement 0,2 mm.

20. Élément chauffant selon la revendication 18 ou 19, **caractérisé en ce que** le fil de chauffage a une longueur comprise entre approximativement 3,5 et approximativement 5,5 cm par W de puissance.

21. Élément chauffant selon l'une quelconque des revendications 18 à 20, **caractérisé en ce que** le fil de chauffage est disposé régulièrement dans des voies sur le tapis en fibre de verre, l'écartement entre les voies du fil étant plus étroit au bord du tapis en fibre de verre qu'au centre.
